Europäisches Patentamt

European Patent Office

Office européen des brevets

(19)

(11) Numéro de publication : **0 368 735 B1**

(12)                    **FASCICULE DE BREVET EUROPEEN**

(45) Date de publication du fascicule du brevet :
**22.01.92 Bulletin 92/04**

(51) Int. Cl.$^5$ : **B60N 2/08**

(21) Numéro de dépôt : **89403043.6**

(22) Date de dépôt : **06.11.89**

(54) **Profil de glissières permettant la réalisation de glissières à verrou flottant.**

(30) Priorité : **10.11.88 FR 8814697**

(43) Date de publication de la demande :
**16.05.90 Bulletin 90/20**

(45) Mention de la délivrance du brevet :
**22.01.92 Bulletin 92/04**

(84) Etats contractants désignés :
**AT BE CH DE ES GB GR IT LI LU NL SE**

(56) Documents cités :
**WO-A-86/00857**
**FR-A- 2 385 928**
**US-A- 3 661 352**
**US-A- 4 726 617**

(73) Titulaire : **A. & M. COUSIN Etablissements**
**COUSIN FRERES**
**Le Bois de Flers**
**F-61103 Flers Cédex Orne (FR)**

(72) Inventeur : **Droulon, Georges**
**Rue de la Garenne St Georges des Groseillers**
**F-61100 Flers (FR)**
Inventeur : **Pipon, Yves**
**La Garenne St Georges des Groseillers**
**F-61100 Flers (FR)**

(74) Mandataire : **Madeuf, Claude Alexandre Jean**
**et al**
**CABINET MADEUF 3, avenue Bugeaud**
**F-75116 Paris (FR)**

**Description**

La présente invention a pour objet un profil de glissière pour sièges de véhicules étudié en vue de la réalisation d'une glissière à verrou flottant qui assure un encliquetage sûr et rapide, dans tous les cas, de l'élément supérieur de la glissière par rapport à l'élément inférieur de la glissière.

La réalisation des profils de la glissière, c'est-à-dire de l'élément supérieur et de l'élément inférieur, est étudiée afin d'obtenir la plus grande résistance possible avec des déformations normales à l'utilisation tout en employant des épaisseurs de tôle faibles, tout au moins moindres, que celles utilisées dans la pratique courante pour un même résultat. Dans le cas présent, on obtient donc une glissière complète d'un poids moindre pour le même résultat, c'est-à-dire aussi bien un bon fonctionnement qu'une bonne résistance à l'arrachement et dans le cas limite, une déformation suffisante de la glissière avant l'arrachement de l'élément supérieur par rapport à l'élément inférieur, donnant ainsi la possibilité d'une absorption d'énergie considérable protégeant de ce fait le passager assis sur le siège lors d'un accident. Cette conception de glissière permet également une protection du passager situé sur le siège arrière qui, sous l'effet d'un choc, même s'il tend les bras pour se protéger ou si son buste est projeté vers l'avant, ne se trouve pas devant une paroi rigide mais devant une paroi qui se déforme et qui, ainsi, permet également d'absorber une certaine quantité d'énergie le protégeant.

La description qui suit montre que les profils supérieur et inférieur ont, de par leurs formes, permis l'obtention d'une résistance considérable. Il y a lieu également de noter que ces profils ont été créés de façon que l'élément supérieur soit de moindre épaisseur que le profil inférieur dans le souci d'obtenir une déformation pour absorber de l'énergie mais également d'obtenir un resserrement de l'élément supérieur sur l'élément inférieur, ce qui permet un fonctionnement parfait de la glissière.

Dans ce qui suit, il est décrit une glissière conforme à l'invention qui peut être utilisée seule dans le cas où le siège ne comporte qu'une glissière ou au contraire être montée de façon classique, c'est-à-dire que deux glissières sont disposées parallèlement l'une à l'autre à une certaine distance pour recevoir l'armature de l'assise du siège considéré.

Dans ce dernier cas, il est possible de commander les deux verrous flottants de glissières à l'aide d'une seule commande placée soit sous le siège dans le cas d'un arceau formant palonnier, soit à droite ou à gauche du siège, dans le cas d'une manette.

On peut également concevoir que le verrou flottant soit solidaire de la partie fixe, à savoir le plancher d'un véhicule et, de ce fait, la partie mobile de la glissière porte une denture coopérant avec le verrou précité.

De plus, comme dans le cas précédent, il est possible de concevoir une commande soit manuelle soit par moyens moteurs (électrique ou pneumatique) pour déverrouiller et verrouiller la denture considérée par rapport au verrou flottant.

Il est prévu sur l'élément supérieur de la glissière juste dans l'emplacement du montage du verrou flottant, des ouvertures permettant aux dents du peigne constituant le verrou flottant de pénétrer à travers l'élément supérieur pour venir s'enclencher dans la denture prévue sur l'un des côtés de l'élément inférieur, cette denture continue étant découpée sur la presque totalité de la longueur du profil inférieur et ayant pour chaque ouverture un profil sensiblement trapézoïdal facilitant ainsi la pénétration des dents du peigne constituant le verrou flottant qui est monté sur un axe maintenu dans un boîtier solidaire de la paroi latérale interne de l'élément supérieur de la glissière.

On obtient ainsi, du fait que le verrou flottant peut basculer dans un sens ou dans l'autre de son axe de maintien, que, quelle que soit la position relative de la denture de l'élément fixe de la glissière par rapport à l'élément mobile supérieur de la glissière portant le verrou, les dents de ce verrou pénètrent à tous coups dans la denture de l'élément fixe de la glissière en évitant l'effet de "mitraillette" qui se produit très souvent pour les glissières normales puisque les dents du peigne du verrou glissent alors d'une manière continue sur la surface supérieure de la denture du profil fixe inférieur sans pénétrer dans les espaces interdentaires, donc ne permettant pas le verrouillage de la glissière, ce qui est très dangereux si ce phénomène se produit au moment d'un accident puisque le siège et donc le passager qui représente une masse importante, n'est pas fixe par rapport au véhicule et peut donc être entraîné brutalement avec toutes les conséquences qui en découlent.

Le verrou flottant de la présente invention permet donc, comme cela est indiqué ci-dessus, dans tous les cas, un verrouillage sûr et rapide de l'élément fixe de cette glissière quelles que soient les conditions de montage même, d'une part, s'il existe un décalage angulaire dans le plan horizontal des zones d'appui des profilés inférieurs et, d'autre part, si les parties supérieures planes sous l'assise du dossier présentent également un décalage angulaire horizontal pouvant être amplifié par le montage d'un dispositif de réglage en hauteur de l'assise.

En effet, le montage flottant du verrou ou peigne assure automatiquement le rattrapage des jeux.

Conformément à l'invention, le profilé inférieur en section sensiblement en U comporte des ailes présentant chacune dans sa zone médiane un couloir demi-cylindrique prolongé par une partie rabattue destinée à recouvrir les extrémités verticales repliées en V des branches latérales du profil supérieur, ces diverses conformations délimitant de chaque côté de la glissière des couloirs contenant chacun un jeu de billes séparé par une tige, puis l'aile du profil inférieur est découpée pour former une rangée de dents ayant chacune une forme trapézoïdale prolongée par une forme rectangulaire pour coopérer avec un verrou-peigne à section en L percé d'ouvertures rectangulaires, ce peigne étant monté libre sur un axe pouvant être déplacé par la commande de la glissière considérée, puis un ressort imprimant à ce peigne une pression qui permet le passage des parties du peigne (22) situées entre les ouvertures à travers les ouvertures prévues dans le profil supérieur en vue de la pénétration de ce peigne dans la rangée de dents du profil inférieur pour verrouiller le profil supérieur sur le profil inférieur.

Suivant une autre caractéristique de l'invention, le verrou-peigne présente parfois, dans les deux sens, une inclinaison de plusieurs degrés par rapport à l'horizontal et, ce, en général, au moment de l'ouverture du verrouillage ce qui permet au verrou de pénétrer dans les dents en assurant le maintien du profil supérieur par rapport au profil inférieur.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une coupe élévation d'une glissière conforme à l'invention.

La fig. 2 est une élévation latérale longitudinale de la glissière.

La fig. 3 est une vue en plan correspondant à la fig. 2.

La fig. 4 est une vue, à plus grande échelle, en élévation latérale, d'un verrou flottant sur la glissière.

La fig. 5 est une vue, à plus grande échelle, d'une élévation latérale partielle de la denture de l'élément fixe de la glissière représentée dans la forme développée.

La fig. 6 est une élévation de face du verrou flottant.

La fig. 7 est un plan correspondant à la fig. 6.

La fig. 8 est une élévation latérale du verrou flottant.

La fig. 9 est une variante de réalisation du verrou flottant et du levier de commande.

La fig. 10 est un plan correspondant à la fig. 9.

La fig. 10a est une coupe suivant la ligne X-X de la fig. 10.

La fig. 11 est une vue schématique, à grande échelle, d'une partie extérieure du levier de commande et de son ouverture.

Les fig. 12 et 13 sont des coupes partielles suivant les lignes A-A et B-B du levier de commande représenté aux fig. 10 et 10a.

Les fig. 14 et 15 sont des vues en plan et en élévation latérale d'une variante de réalisation du levier de commande de la glissière.

La fig. 16 montre, en vue de face, la glissière de la fig. 14 mais à plus petite échelle.

Les fig. 17 et 18 sont des vues en élévation et en plan du verrou flottant montré aux fig. 14, 15 et 16.

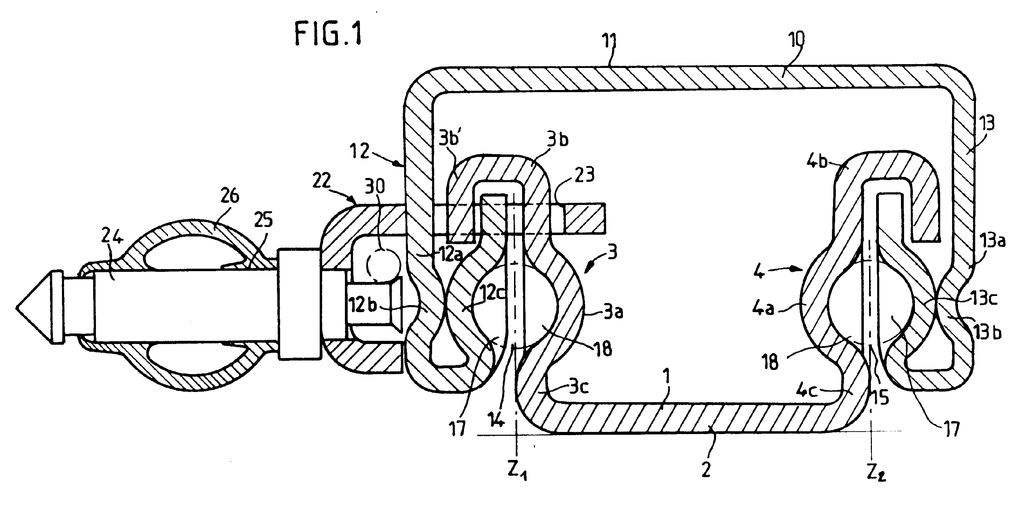

A la fig. 1, on a représenté, en bout, une glissière conforme à l'invention et l'on y voit le profil inférieur fixe 1 de la glissière qui a sensiblement en section la forme d'un U et dont le fond 2 est plat, largement dimensionné de façon à permettre la fixation de la glissière par l'intermédiaire de ce fond 2 soit directement sur le plancher du véhicule, soit à l'aide d'un soubassement sur le plancher considéré et, ce, par tous moyens appropriés (boulons, boulons et écrous, soudures par points, etc.).

Comme le fond 2 est totalement libre, les ailes 3, 4 de l'U formant l'élément fixe inférieur de la glissière sont conformées dans leur zone 3a, 4a pour délimiter sensiblement des demi-cylindres puis les extrémités 3b, 4b sont repliées en U vers l'extérieur.

Il est à remarquer que la pliure inférieure 3c, 4c est réalisée de façon à provoquer une certaine déformation amenant le bord extérieur de chaque pliure sur l'axe vertical $Z_1$, $Z_2$ qui doit servir d'axe de centrage aux billes placées entre l'élément fixe de la glissière et l'élément mobile de cette dernière.

On obtient ainsi dans les zones 3c, 4c une excellente résistance à la déformation du profil inférieur de la glissière et un appui très large des billes.

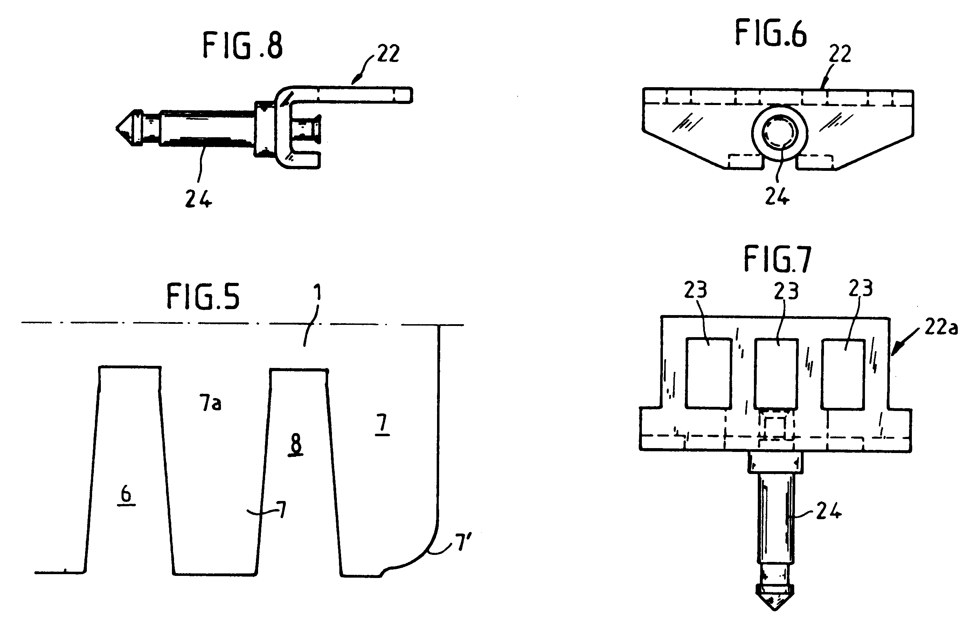

Comme cela est visible à la fig. 1, l'aile supérieure rabattue 3b' est découpée pour former une denture 6 dont on a représenté une vue développée, à très grande échelle à la fig. 5, et dont chaque dent 7 a une forme trapézoïdale prolongée par une forme rectangulaire en 7a, ce qui fait que les parties évidées 8 ont une forme semblable mais plus petite. Cette forme trapézoïdale réalisée dans le flanc de tôle évite, au cours du pliage du U renversé (voir fig. 1), que la matière, en se pliant et en se déformant, remplisse la denture par des excroissances qui empêcheraient le peigne (22) de rentrer dans le passage 8. Seules les dents d'extrémités 7' sont arrondies sur leur partie extrême pour éviter toute agression au cours des manutentions et des diverses opérations de montage ou de rangement des flancs bruts lorsqu'ils sortent des outils de presse.

En ce qui concerne le profil supérieur 10 (voir fig. 1), celui-ci a en section la forme d'un U retourné dont le fond 11 est parfaitement plan pour ainsi faciliter la fixation, sur la face supérieure de ce fond 11, des organes de jonction de l'armature de l'assise du siège. Le fond 11 est à une distance suffisante des parties supérieures des extrémités 3b, 4b en U du profil inférieur 1.

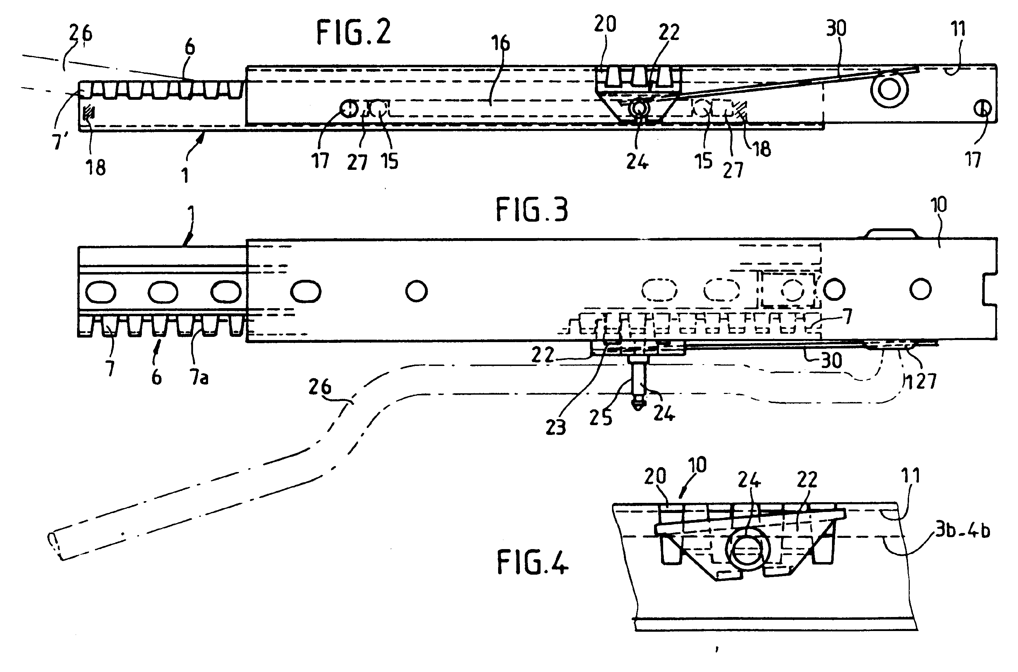

De plus, les branches latérales 12, 13 du profil supérieur sont rectilignes jusqu'à certaines zones inférieures 12a, 13a, zones dans lesquelles ses extrémités sont conformées en V aplati dont les branches 12b, 12c, 13b, 13c sont serrées l'une contre l'autre (voir fig. 1) afin d'obtenir dans la zone inférieure du profil supérieur 10 un renforcement augmentant de ce fait la résistance de la glissière dans sa zone de grands efforts et permettant également la mise en place des billes 14 et 15. En général, au nombre de quatre (deux de chaque côté de la glissière), ces billes sont séparées par une tige séparatrice 16 visible à la fig. 2 et disposée entre deux d'entre elles placées du même côté de la glissière. Lorsque celles-ci sont en plastique, un cimblot 27 est disposé entre des butées de course 17, 18 et lesdites billes pour éviter leur éclatement sous le choc d'arrêt de course.

De plus, afin de limiter correctement le déplacement des billes 14 et 15 dans les couloirs constitués par le recouvrement du profil inférieur 1 par le profil supérieur 10 il est prévu aux extrémités de ce couloir des butées 17, 18 constituées par des déformations des ailes du profil inférieur 1.

Il est également prévu comme cela est visible aux fig. 2 à 4, dans le profil supérieur 10 des ouvertures 20 ayant la même forme que la denture 6 du profil inférieur 1 mais ces ouvertures, au nombre de quatre dans le cas présent permettent la mise en place d'un verrou ou peigne 22 (voir fig. 6 et 7) constitué par une pièce en L percée sur son grand côté 22a de trois ouvertures rectangulaires 23. La petite aile de la pièce 22 porte un axe 24 qui peut tourillonner dans un trou 25 d'un palonnier 26 servant à la commande de la glissière, ce palonnier 26 étant articulé dans un palier 127 solidaire de la partie arrière du profil supérieur 10 de la glissière (voir fig. 3). Ainsi, le peigne 22 est totalement libre en rotation vis à vis du profil supérieur 10 dont les ouvertures 20 permettent la pénétration des parties du peigne 22 situées entre les ouvertures 23 en direction des dents 7 portées par l'aile 3b' du profil inférieur 1 de la glissière.

Il y a lieu de signaler que la position du peigne 22 est soumise à l'action d'un ressort 30 (voir fig. 1) qui tend à faire pénétrer les parties du peigne 22 situées entre les ouvertures 23 à travers les ouvertures 20 du profil supérieur 10 et d'amener en même temps ces ouvertures 23 du peigne 22 sur les dents 7 de l'aile 3b' du profil inférieur 1 de la glissière. Le ressort 30 est un ressort rectiligne supporté sur le côté extérieur du profil supérieur 10 de la glissière.

Lors du relâchement du palonnier 26, il est possible que le verrou se trouve dans la position représentée à la fig. 4 c'est-à-dire incliné d'un angle important par rapport à l'horizontal, il vient donc régulièrement en prise avec au moins l'un des interstices de la ligne de dents 7 du profil inférieur 1 et de ce fait il se produit toujours un enclenchement immédiat, en évitant que le peigne glisse sur le dessus des dents. Ainsi, on obtient un verrouillage de bonne qualité et très rapide sans qu'il y ait possibilité que se produise le phénomène dit de "mitraillette".

Le désengrènement du peigne 22 sur la glissière 6 est cependant très rapide à cause du bras de levier considérable que présente le palonnier 26 et il se produit donc une libération extrêmement souple et efficace du profil supérieur 10 par rapport au profil inférieur 1 en soulevant légèrement ce palonnier 26 qui est placé sous l'assise du siège considéré.

Bien que cela ne soit pas représenté, on peut remplacer le palonnier 26 par un levier placé sur l'un des côtés du siège et qui commande par un barreau transversal convenablement coudé les deux axes 24 portant les peignes 22.

La glissière présente donc des qualités de résistance très importantes en raison de la conformation en section des profils inférieur 1 et supérieur 10, et d'un mouvement très souple du fait du coulissement parfait des billes 14, 15 qui sont guidées dans des zones d'appui identiques entre le profil supérieur et le profil inférieur. En provoquant le décalage de l'axe des billes par rapport à l'axe du jeu réalisé entre les deux faces opposées du profil inférieur 1 et du profil supérieur 10 on obtient ce coulissement doux et souple.

Mais, de plus, le peigne flottant 22 coopérant avec des dentures de profil trapézo-rectangulaire assure un ancrage parfait du profil supérieur 10 par rapport au profil fixe inférieur 1.

Bien que l'on ait déjà indiqué que l'épaisseur du profil supérieur 10 est en général plus faible que l'épaisseur du profil inférieur 1, il est possible également dans certains cas d'employer pour la fabrication du profil supérieur 10 une tôle d'une épaisseur pratiquement identique. Ceci est en général le cas lorsqu'il s'agit de sièges de véhicules de haut de gamme devant être réalisés sur des véhicules circulant à très grande vitesse.

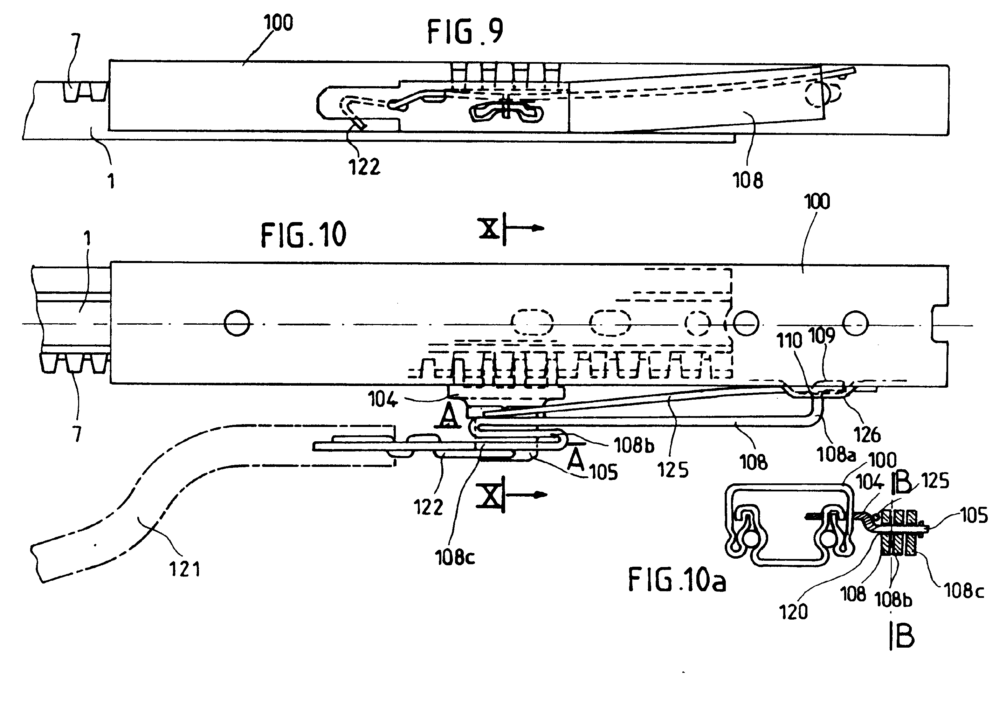

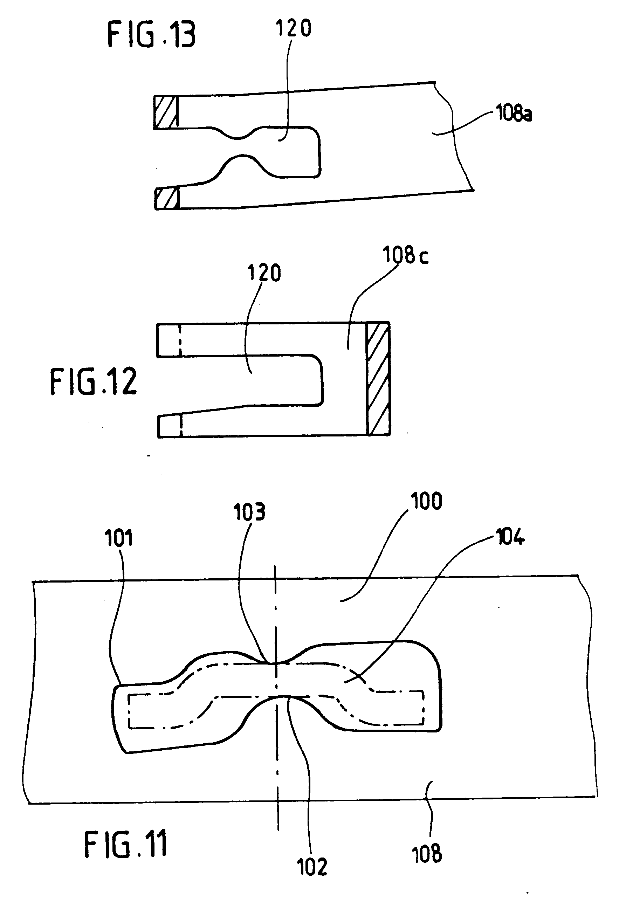

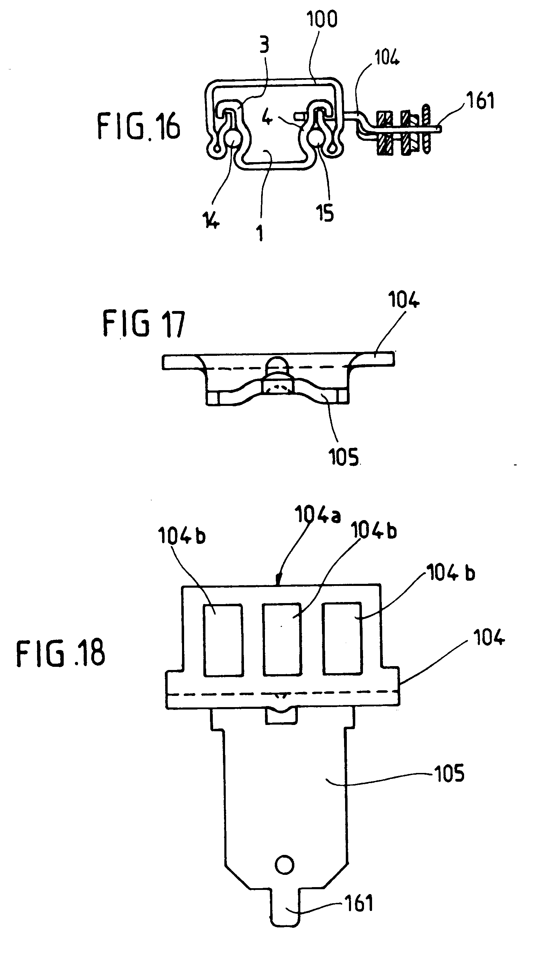

Suivant les variantes représentées aux fig. 9 à 18, le profil supérieur 100 de la glissière (voir fig. 9, 10 et 11) est muni d'un levier de commande réalisé et comportant latéralement une ouverture 101 en W renversé présentant, en son centre, deux parties arrondies 102, 103 qui, d'une part, servent à maintenir et, d'autre part, permettent le basculement du verrou ou peigne flottant 104 correspondant au verrou flottant 22.

En effet, comme cela est bien visible aux fig. 10a, 16 et 18 le verrou flottant 104 présente, à sa partie avant, un cadre 104a percé d'ouvertures rectangulaires 104b formant le peigne puis est prolongé, à sa partie arrière, par une queue 105 légèrement déformée en V (fig. 9, 11 et 15) afin d'épouser, autant que faire se peut, l'espace libre laissé entre les parties arrondies 102, 103 de l'ouverture 101 percée dans le levier de commande 108 de la glissière.

L'ensemble des autres pièces étant identique, les références sont les mêmes.

Il y a lieu de signaler (voir fig. 10) que la queue 105 du verrou flottant 104 permet la fixation d'une pièce de liaison faisant partie du levier de commande 108 affectant sensiblement la forme d'une double épingle à linge retournée ou d'un Z aplati. La partie 108a, terminée par un crochet 109 pénétrant dans un trou 110 du profil supérieur 100 de la glissière, passe dans la queue 105 du peigne ou verrou flottant 104 par des trous 120 de façon à ce que les branches 108a, 108b et 108c de cette pièce de liaison faisant partie du levier de commande 108 soient solidaires de la queue 105 du peigne 104 et, finalement, l'extrémité 108c de ladite pièce de liaison est accrochée par un moyen quelconque de l'arceau 121 de commande de la glissière.

Dans le cas présent, cet accrochage se fait à l'aide d'une pièce conformée 122 solidaire, par l'une de ses extrémités, de la queue 105 et, par son autre extrémité, de la partie libre arrière de l'arceau 121.

Finalement, il y a lieu de noter la présence du ressort lame 125 qui, de par sa disposition puisqu'il est accroché dans une protubérance latérale 126 du profil 100, tend à abaisser le verrou flottant dans la position de verrouillage, par pénétration du peigne 104 dans la denture 7 du profil inférieur de la glissière.

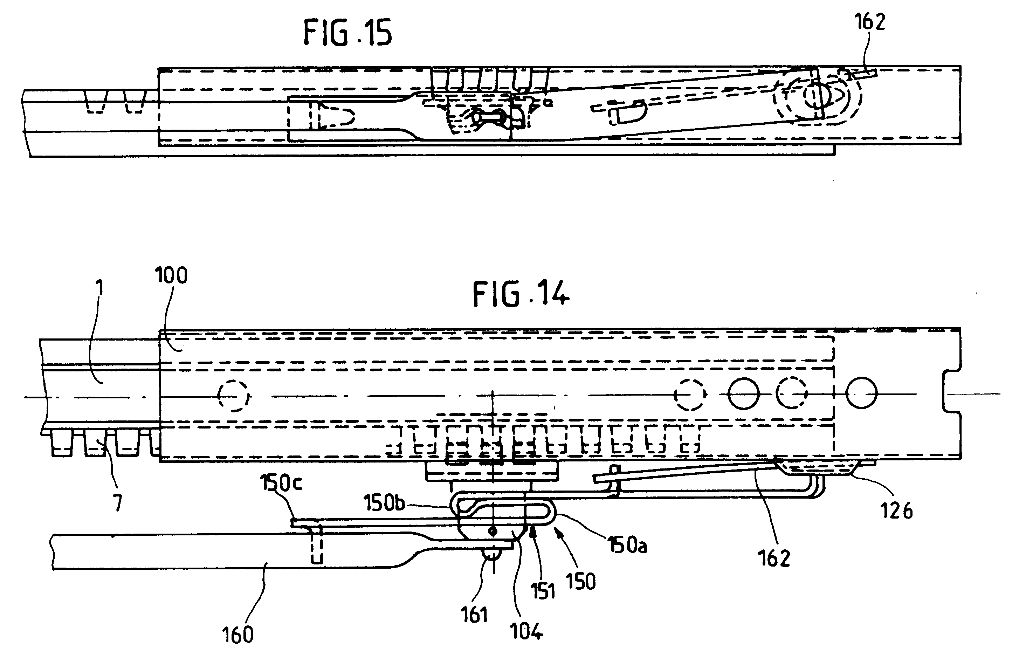

Aux fig. 14 et 15, le montage est identique à celui des fig. 9 à 13 mais la pièce de liaison faisant partie du levier de commande 150 présente dans sa zone centrale 151 d'abord une pliure 150a à angle droit à 180° et, dans sa zone opposée, une pliure 150b sensiblement de 360° afin de permettre le montage aisé sur un arceau 160 qui est articulé sur l'extrémité arrière 161 du peigne 104. De ce fait, l'extrémité 150c de ladite pièce de liaison rend solidaire l'arceau 160 avec l'extrémité 161 du peigne 104. Un ressort lame 162, disposé à l'arrière de cette pièce de liaison et dont le montage est identique au ressort lame 125, permet l'introduction du peigne 104 entre les dents 7 du profil inférieur 1 de la glissière.

Ces deux montages permettent donc l'emploi de ce peigne flottant sur la totalité des glissières quelque soit l'emplacement laissé pour l'arceau de commande sous le siège considéré.

## Revendications

1. Profil de glissières pour sièges de véhicules permettant la réalisation de glissières à verrou flottant afin d'assurer un verrouillage sûr entre un profil inférieur fixe (1) et un profil supérieur mobile (10), le profil inférieur (1) en section sensiblement en U comportant des ailes (3, 4) présentant chacune dans sa zone médiane, un couloir demi-cylindrique (3a, 4a) prolongé par une partie rabattue (3b, 4b) destinée à recouvrir les extrémités verticales repliées en V des branches latérales (12, 13) du profil supérieur (10), ces diverses conformations délimitant de chaque côté de la glissière des couloirs contenant chacun un jeu de billes (14, 15) séparé par une tige (16), puis l'aile (3b') du profil inférieur (1) étant découpée pour former une rangée (6) de dents (7) ayant chacune une forme trapézoïdale prolongée par une forme rectangulaire pour coopérer avec un verrou-peigne (22) à section en L percé d'ouvertures rectangulaires (23), ce peigne (22) étant monté libre sur un axe (24) pouvant être déplacé par la commande de la glissière considérée, puis un ressort (30) imprimant à ce peigne (22) une pression qui permet le passage des parties du peigne (22) situées entre les ouvertures (23) à travers les ouvertures (20) prévues dans le profil supérieur (10) en vue de la pénétration de ce peigne (22) dans la rangée (6) de dents (7) du profil inférieur (1) pour verrouiller le profil supérieur (10) sur le profil inférieur (1).

2. Profil de glissières suivant la revendication 1, caractérisé en ce que le verrou-peigne (22) présente dans les deux sens en permanence une inclinaison de plusieurs degrés par rapport à l'horizontal, et, ce, en général, au moment de l'ouverture du verrouillage ce qui permet au verrou-peigne de pénétrer dans les dents (7) en assurant le maintien du profil supérieur (10) par rapport au profil inférieur (1).

3. Profil de glissières suivant la revendication 1, caractérisé en ce que l'axe (24) du verrou-peigne (22) est fixé sur l'aile libre du verrou incliné de 90° par rapport à l'aile portant les ouvertures (23).

4. Profil de glissières suivant la revendication 1, caractérisé en ce que le profil inférieur (1) a une épaisseur plus importante que l'épaisseur de profil supérieur (10) qui est renforcé par les conformations (12b, 12c, 13b, 13c) inférieures de ses ailes latérales (12, 13).

5. Profil de glissières suivant la revendication 1, caractérisé en ce que l'axe des couloirs contenant les billes (14, 15) est décalé par rapport à l'axe de ces billes afin d'obtenir un coulissement doux et souple du profil supérieur (10) sur le profil inférieur (1).

6. Profil de glissières suivant la revendication 1, caractérisé en ce que le levier de commande (108) de la glissière présente sur son côté, une ouverture sensiblement en W renversé (101) dont la partie centrale présente deux arrondis opposés (102, 103) servant de points de pivotement et de maintien à la queue (105) d'un verrou flottant (104) dont la commande peut être réalisée par l'intermédiaire d'une pièce de liaison faisant partie du levier de commande (108), ledit levier de commande ayant la forme d'une double épingle à linge retournée ou d'un Z aplati dont l'une des branches est articulée sur les formes arrondies (102, 103), l'autre extrémité (109) étant introduite dans l'extrémité libre de la glissière.

7. Profil de glissières suivant les revendications 1 et 6, caractérisé en ce que le verrou flottant (104) est muni d'une queue (105) sous laquelle s'articule la pièce de liaison faisant partie du levier de commande (150) formant deux boucles opposées autour de cette queue (105), l'une des extrémités étant accrochée à l'arceau (160) solidaire de l'extrémité (161) arrière de la queue (105) du peigne (104) et l'autre accrochée sur une protubérance (126) interne du profil supérieur (100) de la glissière, le tout étant soumis à un mouvement d'abaissement par un ressort lame (162) contraignant le verrou flottant (104) à pénétrer dans les dents (7) du profil inférieur (1) de la glissière.

## Patentansprüche

1. Schienenprofil, welches die Realisierung von Schienen mit schwimmend gelagerter Verriegelung gestattet, um eine sichere Verriegelung zwischen einem festen unteren Profil (1) und einem beweglichen oberen Profil (10) sicherzustellen, wobei das im wesentlichen U-förmige untere Profil (1) Flügel (3, 4) umfasst, welche jeder im mittleren Bereich eine halbzylindrische Gleitbahn (3a, 4a) aufweisen, welche durch einen umgeschlagenen Abschnitt (3b, 4b) verlängert ist, dazu bestimmt ist, die V-förmig zurückgebogenen vertikalen Enden der Seitenteile (12, 13) des oberen Profils (10) abzudecken, wobei diese Ausgestaltungen auf jeder Seite der Gleitschiene Gleitbahnen begrenzen, welche jede einen Satz von Kugeln (14, 15) enthält, die durch einen Stab (16) voneinander getrennt sind, wobei der Flügel (3b') des unteren Profiles (1) ausgeschnitten ist, um eine Reihe (6) von Zähnen (7) zu bilden, von welchen jeder trapezoide Form, verlängert durch einen rechtwinkeligen Abschnitt aufweist, um mit einem im Querschnitt L-förmigen Verriegelungskamm (22) mit rechteckigen Öffnungen (23) zusammenzuwirken, wobei dieser Kamm (22) frei auf einer Achse (24) angebracht ist und durch das Bedienungselement der betrachteten Gleitschiene verschoben werden kann, und wobei eine Feder (30) einen Druck auf diesen Kamm (22) ausübt, welche das Durchführen der zwischen den Öffnungen (23) angeordneten Abschnitte des Kammes (22) durch die Öffnungen (20) im oberen Profil (10) gestattet, um den Kamm (22) in die Reihe (6) der Zähne (7) des unteren Profiles (1) eindringen zu lassen und derart das obere Profil (10) gegenüber dem unteren Profil (1) zu verriegeln.

2. Schienenprofil gemäss Anspruch 1, dadurch gekennzeichnet, dass der Verriegelungskamm (22) in beiden Richtungen permanent und im allgemeinen Im Moment des Öffnens der Verriegelung eine Neigung von mehreren Grad in bezug auf die Horizontale aufweist, was dem Verriegelungskamm (22) gestattet, in die Zähne (7) einzudringen und so die Haltewirkung des oberen Profiles (10) in bezug auf das untere Profil (1) sicherzustellen.

3. Schienenprofil gemäss Anspruch 1, dadurch gekennzeichnet, dass die Achse (24) des Verriegelungskammes (22) auf dem freien Flügel der Verriegelung montiert ist, welche in bezug auf den die Öffnungen (23) tragenden Flügel um 90° geneigt ist.

4. Schienenprofil gemäss Anspruch 1, dadurch gekennzeichnet, dass das untere Profil (1) eine grössere Dicke als das obere Profil (10) aufweist, welches durch die unteren Ausgestaltungen (12b, 12c, 13b, 13c) seiner seitlichen Flügel (12, 13) verstärkt ist.

5. Schienenprofil gemäss Anspruch 1, dadurch gekennzeichnet, dass die Achse der die Kugeln (14, 15) enthaltenden Gleitbahn in bezug auf die Achse dieser Kugeln versetzt ist, um ein welches und sanftes Gleiten des oberen Profils (10) auf dem unteren Profil (1) zu erzielen.

6. Schienenprofil gemäss Anspruch 1, dadurch gekennzeichnet, dass der Bedienungshebel (108) der Gleitschiene an seiner Seite eine im wesentlichen umgekehrt W-förmige Öffnung (101) aufweist, deren zentraler Abschnitt zwei einander gegenüberliegende Abrundungen (102, 103) aufweist, die als Dreh- und Haltepunkte des Endstückes (105) eines schwimmend gelagerten Riegels (104) dienen, dessen Betätigung mittels eines Verbindungsstückes realisiert werden kann, welches ein Teil des Bedienungshebels (108) ist, wobei dieser Bedienungshebel die Form einer doppelten umgekehrten Wäschenadel oder eines abgeplatteten Z aufweist, dessen einer Arm um die abgerundeten Formen (102, 103) drehbar gelagert ist, und dessen anderes Ende (109) in das freie Ende der Gleitschiene eingeführt ist.

7. Schienenprofil gemäss den Ansprüchen 1 und 6, dadurch gekennzeichnet, dass der schwimmend gelagerte Riegel (104) mit einem Endstück (105) versehen ist, unter welchem das Teil des Betätigungshebels bildende Verbindungsstück (150) gelenkig gelagert ist, welches zwei gegenüberliegende Windungen um dieses Endstück (105) bildet, wobei ein Endstück in den kleinen Bogen (160) eingehängt ist, welcher mit dem hinteren Ende (161) des Endstückes (105) des Kammes (104) verbunden ist, und wobei das andere Endstück an einem inneren Vorsprung (126) des oberen Profils (100) der Gleitschiene eingehängt ist und die gesamte Anordnung einer Abwärtsbewegung durch eine Blattfeder (162) unterworfen ist, welche den schwimmend gelagerten Riegel (104) zum Eindringen in die Zähne (7) des unteren Profils (1) der Gleitschiene zwingt.

## Claims

1. Profile element for slides of vehicle seats designed for making floating latch slides so as to provide a reliable latching between a fixed lower profile element (1) and a mobile upper profile element (10), the lower profile element (1) of a substantially U-shaped cross-section comprising a set of wings (3, 4) each having in its median zone a semi-cylindrical channel (3a, 4a) prolongated by a bent-over portion (3b, 4b) provided for covering the V-bent vertical ends of the side branches (12, 13) of the upper profile element (10), these various configurations defining on each side of the slide a set of channels each containing a set of balls (14, 15) separated by a rod (16), then the wing (3b') of the lower profile element (1) being cut out in order to form a row (6) of teeth (7) each having a trapezoidal shape prolongated by a rectangular shape in order to cooperate with an L-section latch-comb (22) formed with rectangular openings (23), this comb (22) being freely mounted on a pin (24) displacable by the control of the slide in consideration, then a spring (30) applying to this comb (22) a pressure permitting the passage of the parts of the comb (22) located between the openings (23) through the openings (20) provided in the upper profile element (10), so as to cause the penetration of this comb (22) into the row (6) of teeth (7) of the lower profile element (1) for latching the upper profile element (10) on the lower profile element (1).

2. Profile element for slides according to claim 1, characterized in that the latch-comb (22) has, in both directions and permanently, an inclination of several degrees with respect to horizontal, and, this, generally, at the moment of release of latching, which enables the latch-comb (22) to penetrate into the teeth (7) by ensuring the holding of the upper profile element (10) with respect to the lower profile element (1).

3. Profile element for slides according to claim 1, characterized in that the pin (24) of the latch-comb (22) is fixed on the free wing of the latch-comb which is inclined by 90° with respect to the wing in which are formed the openings (23).

4. Profile element for slides according to claim 1, characterized in that the lower profile element (1) has a thickness greater than the thickness of the upper profile element (10) which is reinforced by the lower formations (2b, 12c, 13b, 13c) of its side wings (12, 13).

5. Profile element for slides according to claim 1, characterized in that the axis of the channels containing the balls (14, 15) is offset with respect to the axis of these balls, so as to obtain a smooth and reliable sliding of the upper profile element (10) on the lower profile element (1).

6. Profile element for slides according to claim 1, characterized in that the control lever (108) of the slide has, on its side, an opening (101) substantially in the shape of a reversed W, the central portion of which has two opposite rounded portions (102, 103) serving as pivotment and holding points for the tail (105) of a floating latch (104), the control of which can be made via a connecting piece (121) which is a part of the control lever (108), said control lever having the shape of a reverse double clothes-peg or of a flattened Z, one branch of which is articulated on the rounded forms (102, 103), the other end (109) being introduced into the free end of the slide.

7. Profile element for slides according to claims 1 and 6, characterized in that the floating latch (104) is provided with a tail (105) underneath which is articulated the connecting piece which forms a part of the control lever (150) forming two opposite loops around this tail (105), one of the ends being hooked to the arcuate member (160) which is rigidly connected to the rear end (161) of the tail (105) of the comb (104) and the other being hooked onto an inner protuberance (126) of the upper profile element (100) of the slide, the whole being subjected to a downward movement by a leaf spring (162) forcing the floating latch (104) to penetrate into the teeth (7) of the lower profile element (1) of the slide.

FIG.1

EP 0 368 735 B1

FIG.2

FIG.3

FIG.4

EP 0 368 735 B1

FIG.8

22

24

FIG.6

22

24

FIG.5

1

7a

8

7

6

7

7'

FIG.7

23    23    23

22a

24

EP 0 368 735 B1

FIG. 9

FIG. 10

FIG. 10a

EP 0 368 735 B1

FIG.13

FIG.12

FIG.11

EP 0 368 735 B1

## FIG.15

162

## FIG.14

100

1

7

150c

150b

150a

150

151

161

104

160

126

162

FIG. 16

FIG 17

FIG. 18